# EUROPÄISCHE PATENTSCHRIFT

(11) **EP 2 954 509 B1**
(45) Veröffentlichungstag und Bekanntmachung des Hinweises auf die Patenterteilung: **08.11.2017**
(21) Anmeldenummer: 14701795.8
(22) Anmeldetag: 31.01.2014
(51) Int. Cl.: G09F 13/04, G09F 13/06, G09F 13/10

(54) **BELEUCHTBARES ANZEIGEELEMENT SOWIE VERFAHREN ZUR HERSTELLUNG EINES DERARTIGEN ANZEIGEELEMENTS**
ILLUMINATED DISPLAY ELEMENT AND METHOD FOR MANUFACTURING SUCH A DISPLAY ELEMENT
ÉLÉMENT D'AFFICHAGE POUVANT ÊTRE ÉCLAIRÉ AINSI QUE LE PROCÉDÉ DE FABRICATION D'UN TEL ÉLÉMENT D'AFFICHAGE

(30) Priorität: 06.02.2013 EP 13154130
(43) Veröffentlichungstag der Anmeldung: 16.12.2015
(73) Patentinhaber: Weidplas GmbH, 8700 Küsnacht (CH)
(72) Erfinder: BOPPART, Martin, CH-8712 Stäfa (CH); REUTER, Steffen, CH-8713 Uerikon (CH); HARKE, Stefan, CH-74889 Sinsheim (CH)
(74) Vertreter: Rutz, Andrea
(86) Internationale Anmeldenummer: PCT/EP2014/051922
(87) Internationale Veröffentlichungsnummer: WO 2014/122078

(56) Entgegenhaltungen:
- US-A- 2 623 315
- US-A- 2 886 911
- US-A- 4 140 405
- US-A1- 2007 227 055

## Beschreibung

### TECHNISCHES GEBIET

Die vorliegende Erfindung betrifft ein beleuchtbares Anzeigeelement insbesondere für ein Fahrzeug. Derartige Anzeigeelemente werden beispielsweise als Fuss- oder Einstiegsleiste, Zierleiste oder Dekorelement eingesetzt. Die Erfindung betrifft ausserdem ein Verfahren zur Herstellung eines derartigen Anzeigeelements

### STAND DER TECHNIK

In Fahrzeugen und insbesondere Kraftfahrzeugen, wie zum Beispiel Autos, sind üblicherweise Anzeigeelemente vorgesehen, welche zu sehr unterschiedlichen Zwecken dienen können. Um die optische Wahrnehmung der Anzeigeelemente insbesondere in der Nacht zu verbessern, sind diese meist beleuchtbar ausgebildet. Anzeigeelemente sind insbesondere auch im Bereich der Türen und des Kofferraumdeckels oft vorgesehen, um beispielsweise die Höhe der Fussleiste zu kennzeichnen und/oder eine Markenbezeichnung darzustellen. Anzeigeelemente kommen in Fahrzeugen aber auch in Form von Bedienelementen, wie beispielsweise Tasten vor.

Ein beleuchtbares Anzeigeelement, welches ein Dekorelement mit Durchbrüchen in Form eines Schriftzuges aufweist, ist in der EP 2 295 293 offenbart. Eine an der Rückseite des Dekorelements angebrachte lichtdurchlässige Folie greift in die Durchbrüche ein und ist dort mittels eines Leuchtmittels beleuchtbar.

Ein beleuchtbares Bauteil mit einem flächigen Dekorelement, das einen lichtundurchlässigen und einen von einem Beleuchtungsmittel beleuchtbaren lichtdurchlässigen Bereich aufweist, ist in der CH 702 730 gezeigt.

Insbesondere in Fahrzeugen ist es erstrebenswert, die Aufmerksamkeit der Fahrgäste und im Besonderen die Aufmerksamkeit des Fahrers situationsabhängig auf gewisse Anzeigeelemente zu lenken. Es kann sich hierbei beispielsweise um die Taste des Warnblinkers handeln, welcher bei einem starken Abbremsen des Fahrzeugs zur Warnung von allenfalls nachfolgenden Fahrzeugen betätigt werden soll. Auch Anzeigeelemente zur Darstellung von Warnhinweisen, um beispielsweise auf einen tiefen Benzinstand oder einen Motordefekt hinzuweisen, bedürfen einer erhöhten Aufmerksamkeit von Seiten des Fahrers. Es kann aber auch beispielsweise wünschenswert sein, Dekorelemente und insbesondere Einstiegsleisten im Bereich der Türen, des Kofferraums oder der Mittelkonsole mit graphischen Elementen zu versehen und beleuchtbar auszugestalten, um zum Beispiel auf die Herstellermarke hinzuweisen. Durch das Vorhandensein von in der Regel sehr vielen bereits beleuchteten Anzeigeelementen im Fahrzeug stellt es jedoch eine Schwierigkeit dar, die Aufmerksamkeit gerade auf ein bestimmtes Anzeigeelement zu lenken.

Die US 4,140,405 offenbart ein Anzeigeelement, welches eine Erhebung in Form eines Buchstabens aufweist, der von der Rückseite her mittels einer Lichtquelle beleuchtbar ist. Das Licht der Lichtquelle gelangt unter anderem durch seitliche, transparente Streifen hindurch nach aussen zum Betrachter.

Die US 2007/0227055 zeigt ein beleuchtbares Anzeigeelement, bei dem von Lichtquellen ausgestrahltes Licht nicht nur durch die Frontseite einer Erhebung hindurch nach aussen gelangt, sondern auch seitlich durch einen Diffusor hindurch. Dadurch kann die Erhebung umstrahlt werden.

In der US 2,886,911 sind weitere Anzeigeelemente offenbart, bei welchen Licht durch Durchbrüche hindurch nach aussen gelangt, um auf diese Weise die Wahrnehmung des Anzeigeelements zu verbessern.

In der US 2,623,315 ist Anzeigeelement offenbart mit einer buchstabenförmigen Erhebung, deren Seitenflächen beabstandet zu einer Grundplatte angeordnet sind, sodass von einer Lichtquelle ausgestrahltes Licht seitlich nach aussen hin gelangen und die Erhebung umstrahlen kann.

### DARSTELLUNG DER ERFINDUNG

Es ist also eine Aufgabe der vorliegenden Erfindung, ein beleuchtbares Anzeigeelement mit einer verbesserten optischen Wahrnehmbarkeit anzugeben. Zur Lösung dieser Aufgabe wird ein Anzeigeelement vorgeschlagen, wie es in Anspruch 1 angegeben ist. Ausserdem wird in Anspruch 14 ein Verfahren zur Herstellung eines derartigen Anzeigeelements angegeben. Vorteilhafte Ausgestaltungen der Erfindung sind in den abhängigen Ansprüchen angegeben.

Orts- und Richtungsangaben wie oben, unten, vertikal, horizontal, nach oben und nach unten sind im Folgenden jeweils in Bezug auf die zumindest eine im Anzeigeelement ausgebildete Erhebung oder Vertiefung zu verstehen. Definitionsgemäss erstreckt sich die zumindest eine Erhebung nach oben hin bzw. die zumindest eine Vertiefung nach unten hin. Dabei ist üblicherweise die Sichtseite des Anzeigeelements oben und die Rückseite unten angeordnet. In welcher Lage und Position das Anzeigeelement in Bezug auf die Schwerkraftsrichtung tatsächlich zum Beispiel in einem Fahrzeug montiert ist, ist hierbei unerheblich.

Die vorliegende Erfindung stellt also ein beleuchtbares Anzeigeelement insbesondere für ein Fahrzeug zur Verfügung, aufweisend
eine flächig ausgebildete Abdeckung mit einer Sichtseite, einer Rückseite und zumindest einem Durchbruch;
zumindest ein graphisches Element, welches an der Sichtseite der Abdeckung vorgesehen und/oder ausgebildet ist; sowie
ein Leuchtmittel, welches zum Beleuchten des Durchbruchs dient.

Dabei ist das graphische Element vom zumindest einem Durchbruch zumindest teilweise derart umschlossen, dass das graphische Element zumindest teilweise vom Licht des Leuchtmittels umstrahlbar ist. Die Abdeckung weist zumindest eine sich nach oben hin erstreckende Erhebung auf, innerhalb welcher das graphische Element oberhalb des zumindest einen Durchbruchs angeordnet ist, und/oder die Abdeckung weist zumindest eine sich nach unten hin erstreckende Vertiefung auf, innerhalb welcher das graphische Element unterhalb des zumindest einen Durchbruchs angeordnet ist.

Aufgrund des beleuchtbaren Durchbruchs, welcher das graphische Element zumindest teilweise umschliesst und insbesondere zumindest teilweise oder vollständig umrandet, ist das graphische Element vom Licht des Leuchtmittels zumindest teilweise umstrahlbar und wird dadurch in der Wahrnehmung des Betrachters im Vergleich zu anderen Anzeigeelementen hervorgehoben. Das graphische Element wird insbesondere vom Licht des Leuchtmittels eingerahmt. Im Falle, dass das graphische Element innerhalb einer Erhebung angeordnet bzw. ausgebildet ist, ergibt sich aufgrund des unterhalb des graphischen Elements angeordneten Durchbruchs insbesondere eine derartige optische Wirkung, dass das graphische Element im Vergleich zur Fläche der Abdeckung, welche die Erhebung umgibt, abgehoben oder sogar darüber schwebend ist. Im Falle, dass das graphische Element innerhalb einer Vertiefung angeordnet bzw. ausgebildet ist, ergibt sich entsprechend aufgrund der oberhalb des graphischen Elements angeordneten Durchbruchs der optische Effekt, dass das graphische Element als hinter den Teil der Abdeckung, welcher die Vertiefung umgibt, zurückversetzt wirkt. Das graphische Element erscheint also insbesondere in beiden Fällen als wäre es von der umgebenden Abdeckung losgelöst. Die somit erzeugte optische Wirkung führt zu einem auffälligeren Erscheinungsbild des Anzeigeelements. Das Anzeigeelement zieht dadurch die Aufmerksamkeit des Betrachters auf sich, wodurch die optische Wahrnehmbarkeit des Anzeigeelementes verbessert ist.

Das Anzeigeelement, welches üblicherweise auch als ein Dekorelement bezeichnet werden kann, ist bevorzugt als eine Zierleiste, ein Bedienelement, wie beispielsweise eine Taste, und insbesondere bevorzugt als eine Fuss- oder Einstiegsleiste eines Fahrzeugs ausgebildet. Beim Fahrzeug handelt es sich bevorzugt um ein Kraftfahrzeug und insbesondere bevorzugt um ein strassengebundenes Kraftfahrzeug Das beleuchtbare Anzeigeelement kann im Innenbereich und/oder im Aussenbereich des Fahrzeuges vorgesehen sein. Das beleuchtbare Anzeigeelement kann beispielsweise aber auch als eine Zierleiste oder ein Bedienelement eines Haushaltgerätes, wie beispielsweise eines Kühlschrankes, eines Dampfgarers, einer Waschmaschine, eines Backofens, eines Kochherdes, einer Geschirrspühlmaschine oder eines Möbels ausgebildet sein.

Das Merkmal, dass die Abdeckung des Anzeigeelements flächig ausgebildet ist, bedeutet, dass die Abdeckung entlang von zwei Dimensionen wesentlich grösser, insbesondere um ein Vielfaches grösser, dimensioniert ist als entlang einer dritten Dimension, welche sich in der Regel senkrecht zur Flächenausdehnung der Sichtseite der Abdeckung erstreckt. Die Abdeckung ist beispielsweise bandförmig, insbesondere als Band, ausgebildet. Vorteilhaft weist die Sichtseite der Abdeckung einen im Wesentlichen eben ausgebildeten Bereich auf, welcher sich zumindest teilweise, bevorzugt vollständig, um das zumindest eine graphische Element herum erstreckt. Falls mehrere graphische Elemente vorhanden sind, erstreckt sich dieser Bereich zudem insbesondere vorteilhaft zumindest teilweise, bevorzugt vollständig, auch zwischen den graphischen Elementen.

Der zumindest eine Durchbruch ist in der Regel als eine durchgehende Öffnung in der Abdeckung ausgebildet. Diese Öffnung ist vorteilhaft seitlich umlaufend vom Material der Abdeckung umschlossen. Falls nur ein einzelner Durchbruch vorhanden ist, ist dieser üblicherweise langgestreckt ausgebildet, mit einer wesentlich grösseren, insbesondere einer um ein Vielfaches grösseren, Längenausdehnung entlang einer ersten Richtung als entlang einer beispielsweise senkrecht zur ersten Richtung stehenden zweiten Richtung. Der Durchbruch ist dann also beispielsweise als Langloch oder als Schlitz ausgebildet. In diesem Fall umschliesst dieser einzelne Durchbruch wenigstens teilweise oder vollständig das graphische Element. Falls mehrere Durchbrüche vorhanden sind, sind diese üblicherweise derart angeordnet, dass sie das graphische Element gemeinsam zumindest teilweise umschliessen.

Beim graphischen Element kann es sich beispielsweise um ein Symbol, ein Ornament, einen Buchstaben, einen Schriftzug oder ein Logo handeln. Das graphische Element kann durch zumindest einen Teil der Abdeckung ausgebildet bzw. geformt sein. Es kann zum Beispiel aber auch durch zumindest eine auf die Sichtseite der Abdeckung aufgebrachte Schicht gebildet sein. Die zumindest eine Schicht wird beispielsweise durch Aufdrucken, Aufdampfen, wie beispielsweise durch Sputtern, oder durch Aufkleben aufgebracht. Das graphische Element kann aber auch mittels Stanzen oder mittels eines Lasers in oder auf der Sichtseite der Abdeckung ausgebildet sein. Des Weiteren kann es zumindest teilweise oder sogar vollständig durch eine insbesondere in der Abdeckung ausgebildete reliefartige Struktur gebildet sein. Die reliefartige Struktur ist dann zwar innerhalb der Erhebung bzw. Vertiefung angeordnet, stellt in Bezug auf diese bevorzugt aber eine unabhängige, eigenständige Struktur dar, welche insbesondere in einer senkrecht zur Flächenausdehnung der Sichtseite stehenden Richtung wesentlich kleiner dimensioniert ist, als die Erhebung bzw. Vertiefung. Die Höhe der reliefartigen Struktur, womit die maximale Ausdehnung der reliefartigen Struktur entlang der vertikalen Richtung bzw. entlang der senkrecht zur Sichtseite der Abdeckung stehenden Richtung gemeint ist, ist bevorzugt höchstens gleich gross, bevorzugter höchstens ein Zehntel so gross und am bevorzugtesten höchstens ein Fünfzigstel so gross, wie die vertikale Höhe der Erhebung bzw. Vertiefung, also die Ausdehnung der Erhebung bzw. Vertiefung entlang der vertikalen Richtung. Innerhalb der reliefartigen Struktur kann insbesondere ein Material vorgesehen sein, dessen Farbe und/oder Oberflächenstruktur sich vom Material der Abdeckung unterscheidet. Dieses Material kann beispielsweise im Bereich der Sichtseite in die reliefartige Struktur eingelegt sein.

Nach einer Weiterbildung der Erfindung weist das beleuchtbare Anzeigeelement eine Gesamtdicke bzw. eine Längenausdehnung in die vertikale Richtung von 15 Millimeter oder weniger auf. Falls das graphische Element durch eine reliefartige Struktur gebildet wird, kann diese zum Beispiel eine vertikale Höhe von 2 Millimeter oder weniger aufweisen, bevorzugt aber von 1.5 Millimeter oder wenigter, bevorzugter von 1 Millimeter oder weniger, noch bevorzugter von 0.5 Millimeter oder weniger, und am bevorzugtesten von 0.25 Millimeter oder weniger.

Nach einer Weiterbildung der Erfindung ist das Leuchtmittel im Bereich der Rückseite der Abdeckung angeordnet.

Beim Leuchtmittel kann es sich insbesondere um eine oder mehrere Leuchtdioden handeln, welche vorzugsweise im Bereich der Rückseite der Abdeckung angeordnet sind. Möglich ist beispielsweise auch eine Leuchtfolie, insbesondere eine Elektrolumineszenzfolie oder OLED, oder eine Glühbirne.

Vorzugsweise ist die Abdeckung insgesamt einstückig ausgebildet. Das Anzeigeelement ist dadurch einfach herstellbar und weist eine optisch ansprechende Ausgestaltung auf. Die Abdeckung ist bevorzugt aus einem Metall, wie insbesondere Aluminium, Stahl oder Edelstahl, hergestellt. Sie kann aber auch aus einem Kunststoff oder aus einem anderen Material, wie beispielsweise Holz, hergestellt sein. Die Abdeckung ist beispielsweise bandförmig bzw. als Band ausgestaltet. Im Falle von Metall oder Kunststoff, ist die Abdeckung beispielsweise eine flexible Folie oder ein selbstragendes Bauteil. Ein selbsttragendes Bauteil ist im Falle von Metall beispielsweise ein Metallblech. Falls die Abdeckung aus Kunststoff hergestellt ist, kann die Abdeckung wenigstens teilweise durchscheinend sein. Nach einer Weiterbildung der Erfindung weist die Abdeckung eine Dicke von einem Millimeter oder kleiner auf. Das oben genannte Holz wird beispielsweise hergestellt, indem das Holz in einem Autoklaven angeordnet und in den Autoklaven Wasserdampf eingeleitet wird, welches auf das Holz einwirkt. Nach der Entnahme des mit Wasserdampf bearbeiteten Holzes aus dem Autoklaven wird das bearbeitete Holz umgeformt und dann getrocknet.

Bevorzugt ist die Erhebung und/oder die Vertiefung zu einem Grossteil und insbesondere vollständig vom zumindest einen Durchbruch umschlossen. Falls mehrere Erhebungen und/oder Vertiefungen vorhanden sind, sind diese jeweils bevorzugt gemeinsam zu einem Grossteil und insbesondere vollständig vom zumindest einen Durchbruch umschlossen, und insbesondere bevorzugt sind sogar die einzelnen Erhebungen und/oder Vertiefungen jeweils einzeln zu einem Grossteil und insbesondere vollständig vom zumindest einen Durchbruch umschlossen. Es ergibt sich dadurch ein besonders auffälliges Erscheinungsbild des Anzeigeelements, da das graphische Element dann als eingerahmt erscheint.

Vorteilhalft weist die Erhebung eine obere Fläche, insbesondere eine oberste Fläche, bzw. die Vertiefung eine untere Fläche, insbesondere eine unterste Fläche, auf, innerhalb welcher das graphische Element angeordnet ist, und welche insbesondere im Wesentlichen eben ausgebildet ist. Die obere Fläche, insbesondere die oberste Fläche, bzw. die untere Fläche, insbesondere die unterste Fläche, kann beispielsweise aber auch konvex oder konkav ausgebildet sein oder auch eine andere Form aufweisen. Die Erhebung bzw. Vertiefung weist zudem bevorzugt eine im Wesentlichen umlaufende Seitenfläche auf, welche sich von dieser oberen Fläche insbesondere obersten Fläche, aus nach unten hin bzw. von dieser unteren Fläche, insbesondere untersten Fläche, aus nach oben hin erstreckt. Die Seitenfläche verbindet somit dann die obere, insbesondere oberste, bzw. untere, insbesondere unterste, Fläche mit demjenigen Bereich der Abdeckung, welcher die Erhebung bzw. Vertiefung umgibt. Bevorzugt ist der zumindest eine Durchbruch bei dieser Ausführungsform innerhalb dieser Seitenfläche angeordnet. In Bezug auf die obere, insbesondere oberste, bzw. untere, insbesondere unterste, Fläche wird das vom Leuchtmittel ausgestrahlte Licht dann also seitlich durch den zumindest einen Durchbruch hindurch nach aussen hin abgestrahlt. Es ergibt sich dadurch ein besonders ansprechender und auffälliger optischer Effekt. Die Erhebung bzw. Vertiefung kann insbesondere pyramiden- oder kegelstumpfartig ausgestaltet sein. Vorteilhaft ist die obere, insbesondere oberste, bzw. untere, insbesondere unterste, Fläche als eine vieleckige, beispielsweise rechteckige oder quadratische, oder als eine kreisrunde Fläche ausgebildet.

Falls es sich beim graphischen Element um eine Zahl oder einen Buchstaben oder ein Symbol oder ein Ornament oder ein Logo handelt, ist vorteilhaft jeweils für jedes graphische Element, also für jede Zahl bzw. jeden Buchstaben bzw. für jedes Symbol bzw. für jedes Ornament bzw. für jedes Logo, wenigstens eine Erhebung und/oder wenigstens eine Vertiefung vorgesehen. Es kann aber auch ein gesamter Schriftzug innerhalb einer einzelnen Erhebung bzw. Vertiefung vorgesehen sein.

Der zumindest eine Durchbruch kann innerhalb und/oder ausserhalb der Erhebung bzw. Vertiefung angeordnet sein. Nach einer Weiterbildung der Erfindung ist der zumindest eine Durchbruch aber innerhalb einer Seitenfläche der Erhebung und/oder innerhalb einer Seitenfläche der Vertiefung angeordnet.

Nach einer Weiterbildung der Erfindung ist der zumindest eine Durchbruch ausserhalb der Erhebung in einem Teil der Abdeckung, welcher die Erhebung umgibt, bevorzugt umrandet, angeordnet. Nach einer Weiterbildung der Erfindung ist der zumindest eine Durchbruch ausserhalb der Vertiefung in einem Teil der Abdeckung, welcher die Vertiefung umgibt, bevorzugt umrandet, angeordnet.

Nach einer Weiterbildung der Erfindung ist der zumindest eine Durchbruch in einem unteren Bereich der Erhebung im Übergangsbereich einer Seitenfläche der Erhebung zu einem Teil der Abdeckung, welcher die Erhebung umgibt, bevorzugt umrandet, angeordnet. Nach einer Weiterbildung der Erfindung ist der zumindest eine Durchbruch in einem oberen Bereich der Vertiefung im Übergangsbereich einer Seitenfläche der Vertiefung zu einem Teil der Abdeckung, welcher die Vertiefung umgibt, bevorzugt umrandet, angeordnet.

Nach einer Weiterbildung der Erfindung ist der zumindest eine Durchbruch innerhalb einer die Erhebung wenigstens teilweise umschliessenden, bevorzugt umrandenden, Erhöhung und/oder innerhalb einer die Erhebung wenigstens teilweise umschliessenden, bevorzugt umrandenden, Rille oder Kanal angeordnet. Nach einer Weiterbildung der Erfindung ist der zumindest eine Durchbruch innerhalb einer die Vertiefung wenigstens teilweise umschliessenden, bevorzugt umrandenden, Erhöhung und/oder innerhalb einer die Vertiefung wenigstens teilweise umschliessenden, bevorzugt umrandenden, Vertiefung angeordnet.

Gemäss einer Weiterbildung der Erfindung ist der zumindest eine Durchbruch innerhalb eines Bereiches der Abdeckung angeordnet, welcher derart zu einer Erhebung hin geneigt ist, dass die Erhebung vom Licht des Leuchtmittels seitlich anstrahlbar ist. Bevorzugt weist die seitlich anstrahlbare Erhebung dann eine Seitenfläche auf, welche mit dem genannten Bereich der Abdeckung einen Winkel von höchstens 120°, bevorzugt höchstens 90° und insbesondere bevorzugt höchstens 60° einschliesst. Eine derartige Ausbildung des Anzeigeelements kann zum Beispiel erreicht werden, indem angrenzend zur Erhebung zumindest teilweise um diese herum in der Abdeckung ein Kanal oder eine Rille ausgebildet wird und der zumindest eine Durchbruch in einem seitlichen, von der Erhebung entfernt angeordneten Wandungsbereich dieses Kanals bzw. dieser Rille vorgesehen ist. Anstelle eines Kanals oder einer Rille kann auch eine sich zumindest teilweise um die Erhebung herum erstreckende Erhöhung in der Abdeckung ausgebildet sein, wobei der zumindest eine Durchbruch dann seitlich im Bereich eines nahe zur Erhebung angeordneten Wandungsbereichs der Erhöhung angeordnet ist. Der zumindest eine Durchbruch ist bei dieser Ausführungsform bevorzugt derart angeordnet bzw. ausgebildet, dass Licht, welches in einer senkrechten Richtung durch den Durchbruch hindurchtritt, direkt auf eine Seitenfläche der Erhebung fällt. Es bildet sich dadurch ein spezieller optischer Effekt.

In einer Weiterbildung ist die zumindest eine Erhebung und/oder die zumindest eine Vertiefung derart ausgebildet, dass sie aufgrund ihrer Form das graphische Element bildet. Vorteilhaft weist die Erhebung bzw. Vertiefung bei dieser Ausführungsform eine im Wesentlichen ebene Fläche auf, deren Konturen derjenigen des graphischen Elements entsprechen. Diese Fläche der Erhebung bzw. der Vertiefung kann beispielsweise aber auch konvex oder konkav ausgebildet sein oder auch eine andere Form aufweisen. Gemäss einer Weiterbildung der Erfindung kann die Erhebung und/oder Vertiefung zumindest eine vom Leuchtmittel beleuchtbare Aussparung aufweisen, welche derart ausgestaltet ist, dass sie zumindest teilweise, bevorzugt insgesamt, das graphische Element bildet. Vorteilhaft ist diese Aussparung vom Leuchtmittel beleuchtbar, so dass das graphische Element optisch selbst ein Leuchtelement bildet, wodurch das Erkennen des graphischen Elements bei Dunkelheit wesentlich verbessert wird. Gemäß der Erfindung weist das Anzeigeelement zumindest im Bereich des zumindest einen Durchbruchs zumindest eine Tragschicht auf, welche an der Rückseite der Abdeckung angeordnet ist. Falls das Anzeigeelement zudem eine Aussparung aufweist, ist diese Tragschicht bevorzugt auch im Bereich dieser Aussparung an der Rückseite der Abdeckung angeordnet. Die Tragschicht kann dabei insbesondere in den zumindest einen Durchbruch bzw. die Aussparung, falls eine solche vorhanden ist, eingreifen. Insbesondere falls der zumindest eine Durchbruch das graphische Element vollständig umschliesst, kann die Tragschicht zum Tragen bzw. Halten des mit dem graphischen Element versehenen Teils der Abdeckung dienen. Falls das graphische Element mittels zumindest einer Aussparung in der Abdeckung ausgebildet ist und das graphische Element zudem inselförmige Bereiche aufweist, wie sie beispielsweise bei den Buchstaben A und B im Gegensatz zu den Buchstaben C und M vorkommen, kann die Tragschicht zudem zum Tragen bzw. Halten der entsprechend inselförmig ausgebildeten Teile der Abdeckung dienen. Die inselförmig ausgebildeten Teile sind bevorzugt aus demselben Material wie die restliche Abdeckung hergestellt, können aber auch aus einem anderen Material hergestellt sein. Bevorzugt bildet die Abdeckung zusammen mit der zumindest einen Tragschicht einen Verbund aus zumindest zwei Schichten.

Gemäss einer Weiterbildung der Erfindung ist wenigstens im Bereich des zumindest einen Durchbruchs auf der Rückseite der Abdeckung wenigstens eine Folie aufgebracht, die insbesondere zumindest teilweise in den zumindest einen Durchbruch eingreift. Falls die Abdeckung eine Aussparung aufweist, ist diese Folie zudem vorteilhaft auch im Bereich dieser Aussparung an der Rückseite der Abdeckung aufgebracht und greift insbesondere vorteilhaft in diese Aussparung ein. Bevorzugt bildet die Abdeckung zusammen mit der zumindest einen Folie einen Verbund aus zumindest zwei Schichten. Mittels dieser Folie kann das Anzeigeelement gegenüber Verunreinigungen, wie Schmutz und Wasser, nach aussen hin abgedichtet werden. Gemäss einer Weiterbildung der Erfindung ist wenigstens im Bereich des zumindest einen Durchbruchs auf der Rückseite der Abdeckung wenigstens eine Folie aufgebracht, wobei wenigstens im Bereich des zumindest einen Durchbruchs auf der Rückseite der Folie wenigstens eine Tragschicht aufgebracht ist. Bevorzugt bilden die Abdeckung, die zumindest eine Folie und die zumindest eine Tragschicht einen Verbund von zumindest drei Schichten. Durch das Eingreifen der Folie und/oder der Tragschicht in den zumindest einen Durchbruch kann zudem eine optisch noch ansprechendere Ausgestaltung des Anzeigeelements erreicht werden. Die Folie bzw. Tragschicht greift hierzu bevorzugt soweit in den Durchbruch und/oder die Aussparung ein, dass die Folie bzw. Tragschicht im Bereich des zumindest einen Durchbruchs und/oder der Aussparung bündig mit der angrenzenden Sichtseite der Abdeckung ist. Falls in der Folie bzw. in der Tragschicht ein inselförmiger Bereich eingebettet ist, ist der inselförmigen Bereich bevorzugt bündig mit der angrenzenden Sichtseite der Abdeckung. Vorzugsweise füllt die Folie den Durchbruch zumindest teilweise, bevorzugt vollständig, aus. Die Folie ist insbesondere eine Kunststofffolie. Diese kann farblos bzw. weiss oder auch eingefärbt sein. Durch eingefärbte Kunststofffolien können bunte graphische Elemente hergestellt werden. Die Folie kann ein- oder mehrschichtig sein. Möglich ist eine Ausführungsform mit mehreren Folien, die gleich oder unterschiedlich sind. Nach einer Weiterbildung der Erfindung ist die Folie wenigstens bereichsweise durchscheinend bzw. wenigstens teilweise transparent für sichtbares Licht. Nach einer Weiterbildung der Erfindung weist die Folie eine Dicke im Bereich von 1 Millimeter bis 0.05 Millimeter, vorzugweise 0.1 Millimeter bis 0.3 Millimeter auf. Die Folie ist beispielsweise aus ABS, Polykarbonat oder PMMA hergestellt.

Um einen optisch einheitlichen Eindruck zu erwecken, weist die Tragschicht und/oder Folie bevorzugt zumindest im Bereich des Durchbruchs und/oder im Bereich der Aussparung, falls eine solche vorhanden ist, eine Oberflächenbeschichtung auf, welche zumindest annähernd denselben optischen Eindruck bewirkt, wie das Material, aus welchem die Abdeckung hergestellt ist. Bei Tageslicht, wenn das Anzeigeelement nicht beleuchtet ist, ist dadurch der zumindest eine Durchbruch bzw. die Aussparung für den Betrachter weniger gut erkennbar, wodurch das Anzeigeelement einen einheitlicheren, ansprechenden Eindruck für den Betrachter ergibt. Die Folie kann dabei insbesondere metallisiert sein.

Die Tragschicht und/oder die Folie sind bevorzugt jeweils wenigstens bereichsweise lichtdurchlässig ausgebildet. Vorteilhaft bildet die Tragschicht und/oder Folie zudem einen Lichtleiter, welcher dazu dient, vom Leuchtmittel ausgestrahltes Licht zu dem zumindest einen Durchbruch hinzuleiten. Das Leuchtmittel kann dabei insbesondere derart angeordnet sein, dass das ausgestrahlte Licht ausschliesslich auf indirektem Weg, d.h. via Reflexionen, vom Leuchtmittel aus zu dem zumindest einen Durchbruch hingelangen kann. Entsprechend sind vorteilhaft am Lichtleiter Reflexionselemente vorgesehen, welche derart ausgebildet und angeordnet sind, dass das zu dem zumindest einen Durchbruch hingeleitete Licht zumindest einmal seine Richtung ändert. Die Tragschicht und/oder die Folie kann insbesondere auch als Diffusor ausgebildet sein, um das vom Leuchtmittel abgestrahlte Licht zu streuen. Bevorzugt ist dann unterhalb der Tragschicht und/oder Folie ein Lichtleiter angeordnet, aus welchem Licht in den Diffusor ausgekoppelt wird. Bevorzugt ist das Leuchtmittel mindestens teilweise, bevorzugt im Wesentlichen vollständig, im Lichtleiter eingebettet und insbesondere vom Lichtleiter umspritzt. Dies erlaubt eine besonders kompakte Bauweise des Anzeigeelements.

Nach einer Weiterbildung ist die Tragschicht wenigstens bereichsweise durchscheinend bzw. wenigstens teilweise transparent für sichtbares Licht. Die Tragschicht kann aus Kunststoff, bevorzugt aus thermoplastischem Material und/oder duroplastischem Material, hergestellt sein. Vorteilhaft weist die Tragschicht eine Dicke von 1 Millimeter oder grösser auf. Bevorzugt weist die zumindest eine Tragschicht eine maximale Dicke von 10 Millimeter auf. Falls die zumindest eine Tragschicht aus thermoplastischem Kunststoff im Spritzguss hergestellt ist, weist die zumindest eine Tragschicht bevorzugt eine maximale Dicke von 10 Millimeter auf, da, bei einer solchen Dicke, eine rasche Abkühlung der Tragschicht nach deren Herstellung noch möglich ist.

Nach einer Weiterbildung der Erfindung ist auf der Sichtseite der Abdeckung wenigstens bereichsweise, bevorzugt vollflächig, eine Schutzschicht, wie beispielsweise eine Folie, angeordnet. Vorzugsweise ist die Schutzschicht von der Sichtseite ablösbar, insbesondere von Hand ablösbar. Vorzugsweise ist die Schutzschicht transparent.

Es wird ausserdem ein Verfahren zur Herstellung eines beleuchtbaren Anzeigeelements mit einem graphischen Element angegeben, insbesondere eines beleuchtbaren Anzeigeelements wie es oben angegeben ist, aufweisend zumindest die folgenden Schritte:
- Bereitstellen einer flächig ausgebildeten Abdeckung;
- Ausbilden von zumindest einer sich nach oben hin erstreckenden Erhebung und/oder zumindest einer sich nach unten hin erstreckenden Vertiefung in der Abdeckung mittels Umformen der Abdeckung; sowie
- Ausbilden von zumindest einem Durchbruch in der Abdeckung.

Die Erhebung und/oder Vertiefung wird dabei derart ausgebildet bzw. angeordnet, dass das graphische Element innerhalb der Erhebung bzw. Vertiefung angeordnet ist. Das graphische Element und der zumindest eine Durchbruch werden relativ zueinander derart angeordnet und ausgebildet, das der zumindest eine Durchbruch im Falle einer Erhebung unterhalb des graphischen Elements und im Falle einer Vertiefung oberhalb des graphischen Elementes angeordnet ist und dieses zumindest teilweise umschliesst.

Der zweitgenannte Schritt bzgl. des Ausbildens einer Erhebung bzw. Vertiefung sowie der drittgenannte Schritt bzgl. des Ausbildens von zumindest einem Durchbruch können beliebig in der angegebenen oder auch in umgekehrter Reihenfolge durchgeführt werden.

Das Umformen der Abdeckung kann zum Beispiel mittels Tiefziehen, Prägen, wie beispielsweise mit einer Matrize und einer Patrize, oder Hydroformen erreicht werden. Vorteilhaft weist das Verfahren aber zudem den Schritt auf, dass insbesondere mittels des Auftragens von plastifiziertem Material, insbesondere Kunststoff, unter Druck, wie beispielsweise durch Spritzgiessen oder durch Extrusion, eine Tragschicht wenigstens bereichsweise an der Rückseite der Abdeckung, bevorzugt zumindest im Bereich des zumindest einen Durchbruchs, bevorzugter an der gesamten Rückseite der Abdeckung sowie im Bereich des zumindest einen Durchbruchs, angebracht wird.

Bevorzugt wird mittels des Auftragens von plastifiziertem Material, insbesondere Kunststoff, unter Druck, wie beispielsweise durch Spritzgiessen oder durch Extrusion, wenigstens bereichsweise an eine an der Rückseite der Abdeckung angeordneten Folie, bevorzugt zumindest im Bereich des zumindest einen Durchbruchs, eine Tragschicht angebracht.

Gemäss einer Weiterbildung der Erfindung wird die Tragschicht dabei derart unter Druck an der Rückseite der Abdeckung angebracht, dass aufgrund dieses Druckes die zumindest eine Erhebung und/oder die zumindest eine Vertiefung in der Abdeckung ausgebildet wird. Das Herstellungsverfahren wird dadurch besonders einfach und kostengünstig.

Gemäss einer Weiterbildung der Erfindung wird die Tragschicht derart an der Rückseite der Abdeckung angebracht, dass die Tragschicht zumindest teilweise in den zumindest einen Durchbruch eingreift. Zwischen der Abdeckung und der Tragschicht kann zudem eine Folie vorgesehen werden. Die Folie und/oder Tragschicht können an der Rückseite der Abdeckung beispielsweise mittels eines Klebstoffs oder eines Haftvermittlers angebracht werden.

Nach einer Weiterbildung der Erfindung weist das beleuchtbare Anzeigeelement, insbesondere die Tragschicht, Befestigungsmittel auf zum Befestigen des Anzeigeelementes an einer Oberfläche des Fahrzeuges, insbesondere zum Befestigen an einer Oberfläche der Karosserie.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Teilansicht von oben eines beleuchtbaren Anzeigeelements gemäss einer ersten erfindungsgemässen Ausführungsform;
- Fig. 2: eine Querschnittsansicht entlang der Linie II-II durch einen Teil des in der Fig. 1 gezeigten Anzeigeelements;
- Fig. 3: eine seitliche Teilansicht auf die Seitenfläche einer in der Abdeckung eines erfindungsgemässen Anzeigeelements ausgebildeten Erhebung gemäss einer ersten Variante;
- Fig. 4: eine seitliche Teilansicht auf die Seitenfläche einer in der Abdeckung eines erfindungsgemässen Anzeigeelements ausgebildeten Erhebung gemäss einer zweiten Variante;
- Fig. 5: eine Teilansicht von oben eines beleuchtbaren Anzeigeelements gemäss einer zweiten erfindungsgemässen Ausführungsform;
- Fig. 6: eine Querschnittsansicht entlang der Linie VI-VI durch einen Teil des in der Fig. 5 gezeigten Anzeigeelements;
- Fig. 7: eine perspektivische Teilansicht von schräg oben eines beleuchtbaren Anzeigeelements gemäss einer dritten erfindungsgemässen Ausführungsform;
- Fig. 8: eine Querschnittsansicht entlang der Linie VIII-VIII durch einen Teil des in der Fig. 7 gezeigten Anzeigeelements;
- Fig. 9: eine Querschnittsansicht eines Teils eines beleuchtbaren Anzeigeelements gemäss einer vierten erfindungsgemässen Ausführungsform;
- Fig. 10: eine Querschnittsansicht eines Teils eines beleuchtbaren Anzeigeelements gemäss einer fünften erfindungsgemässen Ausführungsform;
- Fig. 11: eine Querschnittsansicht eines Teils eines beleuchtbaren Anzeigeelements gemäss einer sechsten erfindungsgemässen Ausführungsform;
- Fig. 12: eine Querschnittsansicht eines Teils eines beleuchtbaren Anzeigeelements gemäss einer siebten erfindungsgemässen Ausführungsform;
- Fig. 13: eine Querschnittsansicht eines Teils eines beleuchtbaren Anzeigeelements gemäss einer achten erfindungsgemässen Ausführungsform;
- Fig. 14: eine Querschnittsansicht eines Teils eines beleuchtbaren Anzeigeelements gemäss einer neunten erfindungsgemässen Ausführungsform;
- Fig. 15: eine Querschnittsansicht eines Teils eines beleuchtbaren Anzeigeelements gemäss einer zehnten erfindungsgemässen Ausführungsform;
- Fig. 16: eine Querschnittsansicht eines Teils eines beleuchtbaren Anzeigeelements gemäss einer elften erfindungsgemässen Ausführungsform;
- Fig. 17: eine Querschnittsansicht eines Teils eines beleuchtbaren Anzeigeelements gemäss einer zwölften erfindungsgemässen Ausführungsform;
- Fig. 18: eine Querschnittsansicht eines Teils eines beleuchtbaren Anzeigeelements gemäss einer dreizehnten erfindungsgemässen Ausführungsform;
- Fig. 19: eine Querschnittsansicht eines Teils eines beleuchtbaren Anzeigeelements gemäss einer vierzehnten erfindungsgemässen Ausführungsform; sowie
- Fig. 20: eine Querschnittsansicht eines Teils eines beleuchtbaren Anzeigeelements gemäss einer fünfzehnten erfindungsgemässen Ausführungsform.

### BESCHREIBUNG BEVORZUGTER AUSFÜHRUNGSFORMEN

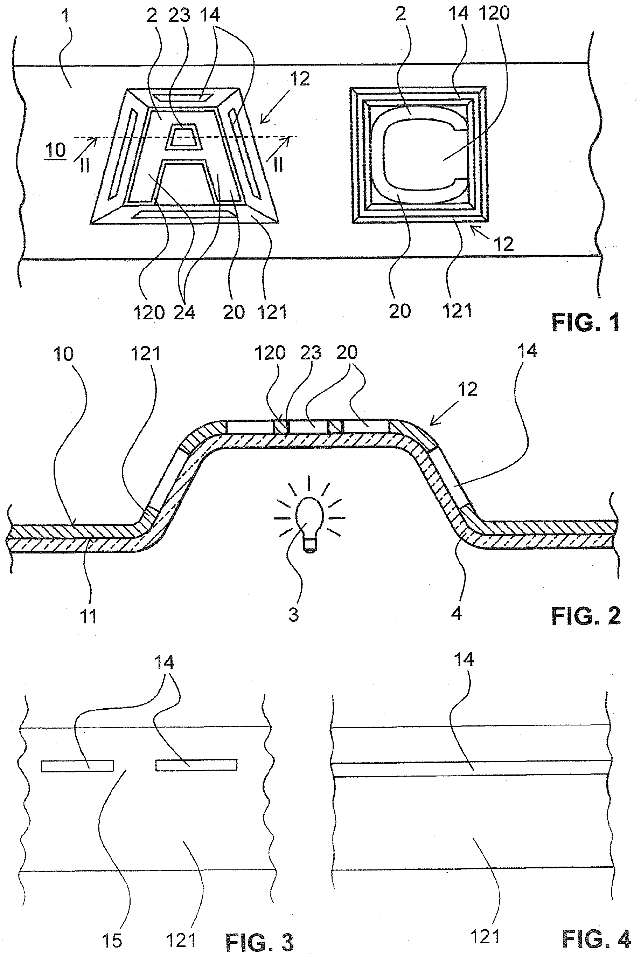

In den Figuren 1 und 2 ist eine erste Ausführungsform eines erfindungsgemässen beleuchtbaren Anzeigeelements gezeigt. In den Figuren 3 bis 20 sind weitere Ausführungsformen und Varianten von erfindungsgemässen beleuchtbaren Anzeigeelementen gezeigt. Gleich oder ähnlich wirkende Elemente des Anzeigeelements werden in den verschiedenen Ausführungsformen jeweils mit demselben Bezugszeichen gekennzeichnet. Bei den in den Figuren 1 bis 20 gezeigten Anzeigeelementen kann es sich insbesondere um Zierleisten, Einstiegs- oder Fussleisten handeln, die insbesondere in Fahrzeugen angebracht sind.

Das in den Figuren 1 und 2 gezeigte Anzeigeelement weist eine insgesamt flächig ausgebildete Abdeckung 1 mit einer in der Figur 1 sichtbaren Sichtseite 10 sowie einer Rückseite 11 auf.

Die Abdeckung 1 weist zwei sich nach oben hin erstreckende Erhebungen 12 auf. Diese Erhebungen 12 sind jeweils pyramidenstumpfartig ausgebildet und weisen jeweils eine eben ausgebildete obere Fläche 120 sowie eine sich von dieser aus umlaufend nach unten hin erstreckende Seitenfläche 121 auf. Die Seitenfläche 121 weitet sich dabei nach unten hin leicht auf. Innerhalb der oberen Fläche 120 ist jeweils eine Aussparung 20 ausgebildet, welche ein graphisches Element 2 in Form des Buchstabens A bzw. C bildet. Selbstverständlich könnte die Aussparung 20 auch die Form eines beliebigen anderen Buchstabens, eines Schriftzugs, einer Zahl, eines Ornamentes, eines Symbols oder eines beliebigen anderen graphischen Elements aufweisen.

Beim vorliegenden Ausführungsbeispiel weist eines der graphischen Elemente 2, nämlich dasjenige, welches den Buchstaben A darstellt, einen inselförmigen Bereich 23 auf, also einen Bereich, der vom graphischen Element 2 vollständig umschlossen ist. In diesem inselförmigen Bereich 23 weist die Abdeckung 1 eine zusätzliche Aussparung auf. Innerhalb der oberen Fläche 120 können weitere Aussparungen vorhanden sein, wie insbesondere im Bereich zwischen den beiden durch den Buchstaben A gebildeten Schenkeln 24, so dass die Aussparungen in Bezug auf die obere Fläche 120 insgesamt einen Grossteil des Flächeninhalts ausmachen.

Innerhalb der Seitenflächen 121 sind jeweils Durchbrüche 14 ausgebildet, welche die Form von Schlitzen aufweisen. Bei der in der Figur 1 auf der linken Seite gezeigten Erhebung 12 mit dem graphischen Element 2 in Form eines A sind vier Durchbrüche 14 vorhanden, welche gemeinsam zumindest teilweise das graphische Element 2 umschliessen. Auf jeder der vier Seiten der kegelstumpfartigen Erhebung 12 ist ein Durchbruch 14 angeordnet. Es kann sogar eine noch grössere Anzahl von Durchbrüchen 14 vorgesehen sein, welche gemeinsam ein graphisches Element 2 umschliessen, und welche, wie es in der Figur 3 gezeigt ist, jeweils durch einen Steg 15 voneinander getrennt sind. Vorzugsweise sind diese Durchbrüche 14 in regelmässigen Abständen zueinander angeordnet. Wie es auf der rechten Seite in der Figur 1 bei der Erhebung mit dem graphischen Element 2 in Form eines C gezeigt ist, kann aber auch nur ein einziger, umlaufender Durchbruch 14 in der Seitenfläche 121 vorhanden sein, welcher das graphische Element 2 bzw. die Aussparung 20 vollständig umschliesst. Ein derartiger Durchbruch 14 ist auch in der Figur 4 gezeigt.

Die Abdeckung 1 kann beispielsweise aus Kunststoff, Holz oder, wie im vorliegenden Ausführungsbeispiel, aus einem Metall, wie insbesondere Aluminium oder Stahl, insbesondere Edelstahl, hergestellt sein. Aufgrund ihrer Herstellung aus einem Metall ist die Abdeckung 1 hier lichtundurchlässig ausgebildet. Unter dem Vorbehalt der von einer Aussparung 20 bzw. eines Durchbruchs 14 vollständig umschlossenen Teile ist die Abdeckung 1 insgesamt einstückig ausgebildet.

Wie es aus der Figur 2 ersichtlich ist, ist an der Rückseite 11 der Abdeckung 1 eine Tragschicht 4 angebracht. Diese Tragschicht 4 erstreckt sich über die gesamte Rückseite 11 der Abdeckung 1 und insbesondere auch über die Bereiche der Durchbrüche 14 und der Aussparungen 20. Die Tragschicht 4 dient insbesondere zum Tragen bzw. Halten von Teilen der Abdeckung 1, welche vollständig von einem Durchbruch 14 oder einer Aussparung 20 umschlossen sind. Bei der Erhebung 12 mit dem graphischen Element 2 in Form eines A betrifft dies hier den inselförmigen Bereich 23 und bei der Erhebung 12 mit dem graphischen Element 2 in Form eines C den gesamten innerhalb des Durchbruchs 14 angeordneten Bereich und somit insbesondere die gesamte obere Fläche 120. Das Vorhandensein einer Tragschicht 4 verhindert zudem, dass Schmutzpartikel und/oder Feuchtigkeit in das Innere des Anzeigeelements hineingelangen können.

Die Tragschicht 4 ist im vorliegenden Ausführungsbeispiel aus einem an die Rückseite 11 der Abdeckung 1 angespritzten Kunststoff hergestellt. Dieser Kunststoff ist insbesondere lichtdurchlässig ausgebildet.

Rückseitig zur Abdeckung 1 ist ein Leuchtmittel 3 vorgesehenen, welches derart angeordnet ist, dass das ausgestrahlte Licht sowohl die Durchbrüche 14 als auch die Aussparungen 20 beleuchtet. Es können hierzu mehrere Leuchtmittel 3 vorgesehen sein, wie zum Beispiel eines für jede der Erhebungen 12, oder das Leuchtmittel kann derart angeordnet sein, dass alle Durchbrüche 14 und Aussparungen 20 beleuchtbar sind. Das vom Leuchtmittel 3 abgestrahlte Licht kann somit durch die Durchbrüche 14 und die Aussparungen 20 hindurch nach aussen treten. Die graphischen Elemente 2 sind dadurch insbesondere bei Dunkelheit gut erkennbar und zudem aufgrund der Durchbrüche 14 jeweils vom ausgestrahlten Licht zumindest teilweise umschlossen. Da die Durchbrüche 14 jeweils unterhalb des graphischen Elements 2 bzw. der Aussparung 20 angeordnet sind, erscheinen die graphischen Elemente 2 gegenüber der Sichtseite 10 desjenigen Teils der Abdeckung 1, welcher die Erhebungen 12 umgibt, für den Betrachter als abgehoben oder sogar darüber schwebend. Das Anzeigeelement zieht dadurch die Aufmerksamkeit des Betrachters auf sich.

Zur Herstellung des beleuchtbaren Anzeigeelements kann zum Beispiel in einem ersten Schritt ein bandförmiges, für die Abdeckung 1 vorgesehenes Material in eine entsprechend ausgebildete Form gebracht werden und in dieser unter Druck mit einem Kunststoff hinterspritzt werden. Dabei kann insbesondere ein so hoher Druck angewandt werden, dass sich das bandförmige Material aufgrund des Drucks verformt und die Erhebungen 12 ausgebildet werden. Die Formen der Erhebungen 12 sind entsprechend in der verwendeten Form bereits vorgegeben. Der Kunststoff bildet dann die Tragschicht 11. Anschliessend können die Durchbrüche 14 und die Aussparungen 20 zum Beispiel mittels eines Lasers ausgebildet werden. Es wäre aber auch möglich, zuerst die Durchbrüche 14 und die Aussparungen 20 zum Beispiel mittels Stanzen auszubilden, um dann zum Beispiel mittels einer Matrize und einer Patrize die Erhebungen 12 zu formen und anschliessend die Tragschicht 11 anzubringen. Die Teile der Abdeckung 1, welche vollständig von einer Aussparung 20 bzw. einem Durchbruch 14 umschlossen sind, müssten hierbei nach dem Ausbilden der Durchbrüche 14 bzw. Aussparungen 20 und bis zum Anbringen der Tragschicht 4 natürlich mit geeigneten Mitteln an Ort und Stelle gehalten werden.

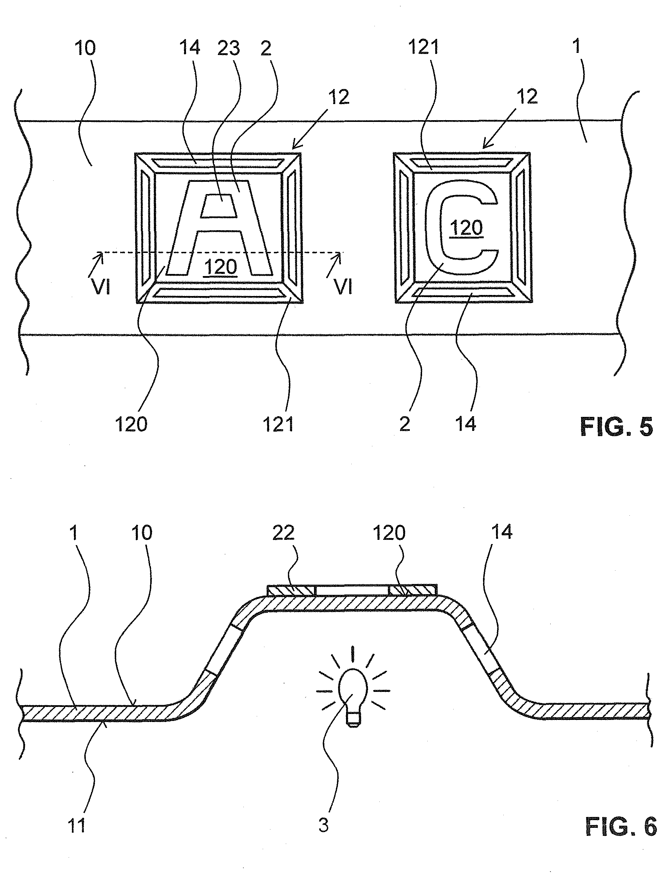

Die in den Figuren 5 und 6 dargestellte Ausführungsform unterscheidet sich von derjenigen, die in den Figuren 1 und 2 gezeigt ist, insbesondere dadurch, dass die graphischen Elemente 2 nicht mittels Aussparungen 20, sondern mittels einer auf die oberen Flächen 120 der Erhebungen 12 aufgebrachte Schicht 22 ausgestaltet ist. Die Schicht 22 ist bevorzugt aus einem anderen Material hergestellt als die Abdeckung 1. Die Schicht 22 kann insbesondere eine andere Oberflächenstruktur und/oder Farbe aufweisen als die Sichtseite 10 der Abdeckung 1. Die Schicht 22 kann beispielsweise mittels eines Klebstoffs oder eines Haftvermittlers an der Sichtweite 10 der Abdeckung 1 angebracht sein oder aufgedruckt sein. In der vorliegenden Ausführungsform weist das Anzeigeelement im Gegensatz zu der in den Figuren 1 und 2 gezeigten Ausführungsform keine Tragschicht auf.

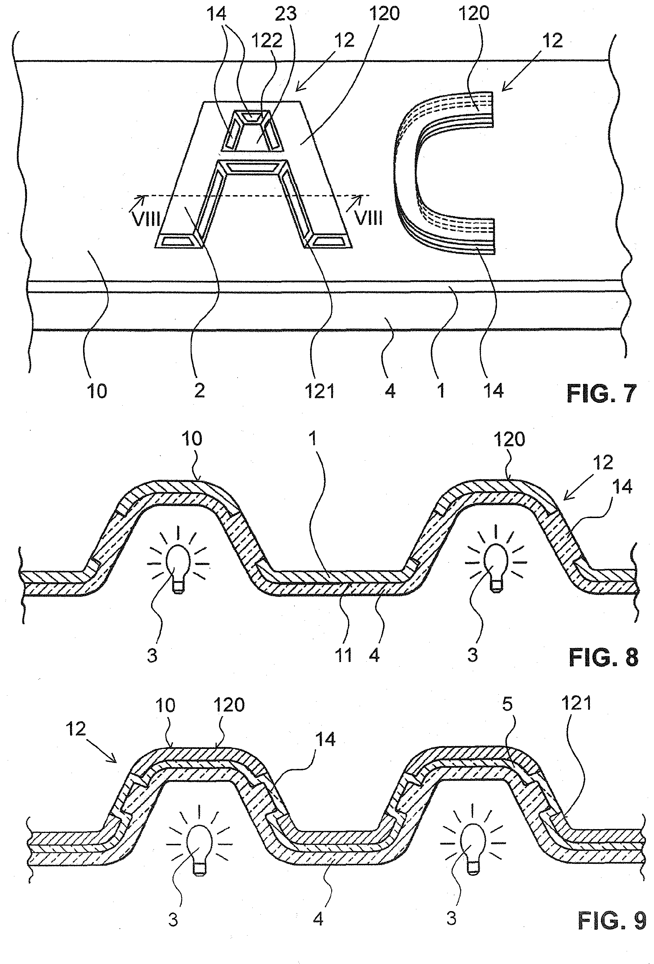

Eine dritte erfindungsgemässe Ausführungsform eines beleuchtbaren Anzeigeelements ist in den Figuren 7 und 8 gezeigt. Die Erhebungen 12 sind hier jeweils derart ausgebildet, dass sie aufgrund ihrer Form jeweils ein graphisches Element 2 bilden. Die graphischen Elemente 2 werden dabei jeweils durch die Form der eben ausgebildeten oberen Flächen 120 der Erhebungen 2 gebildet. Unterhalb dieser oberen Flächen 120 bzw. unterhalb der graphischen Elemente 2 sind jeweils auch bei dieser Ausführungsform Durchbrüche 14 in den Seitenflächen 121 der Erhebungen 12 vorgesehen, welche die graphischen Elemente 2 teilweise oder sogar vollständig umschliessen. Die auf der linken Seite der Figur 7 gezeigte Erhebung 12, welche den Buchstabens A formt, weist im Bereich des inselförmigen Bereiches 23 des graphischen Elementes 2 eine Innenfläche 122 auf, welche sich umlaufend von der oberen Fläche 120 nach unten hin erstreckt. Innerhalb der Innenfläche 122 sind weitere Durchbrüche 14 vorgesehen.

Wie es aus der Figur 8 ersichtlich ist, ist an der Rückseite 11 der Abdeckung 1 im vorliegenden Ausführungsbeispiel eine Tragschicht 4 angebracht, welche in den Bereichen der Erhebungen 12 derart in die Durchbrüche 14 eingreift, dass die Tragschicht 4 mit ihrer Oberseite mit der angrenzenden Sichtseite 10 der Abdeckung 1 bündig ist.

Zwischen der Rückseite 11 der Abdeckung 1 und der Tragschicht 4 kann eine Folie 5 vorgesehen sein, wie es in der Figur 9 gezeigt ist. Die Folie 5, welche wesentlich dünner als jeweils die Tragschicht 4 und die Abdeckung 1 ausgebildet ist, greift gerade soweit in die Durchbrüche 14 ein, dass sie mit ihrer Oberseite mit der Sichtseite 10 der Abdeckung 1 bündig ist.

Beim Leuchtmittel 3 handelt es sich bevorzugt um eine Leuchtdiode. Es ist aber auch die Verwendung einer Leuchtfolie, insbesondere einer Elektrolumineszenzfolie oder einer OLED, oder einer Glühbirne denkbar. Falls eine Leuchtfolie verwendet wird, kann diese als Folie 5 zwischen der Abdeckung 1 und der Tragschicht 4 vorgesehen sein oder alternativ rückseitig an der Tragschicht 4 angebracht sein.

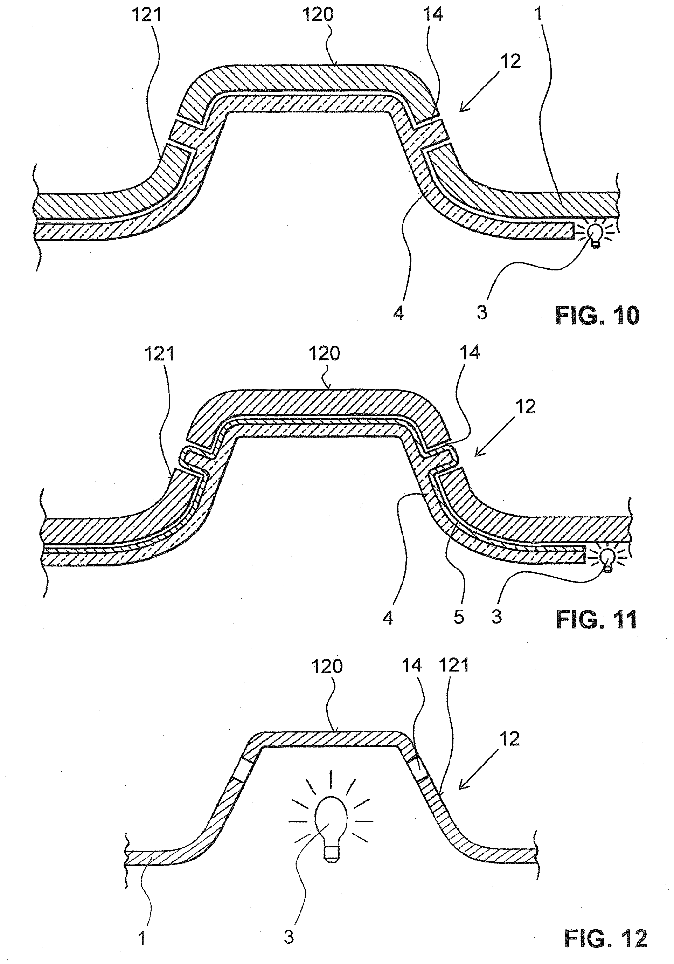

Das Leuchtmittel 3 kann jeweils, wie es bei den in den Figuren 1 bis 9 gezeigten Ausführungsformen der Fall ist, direkt in den Bereichen der Erhebungen 12 rückseitig zur Abdeckung 1 angeordnet sein. Es sind jedoch auch Ausführungsformen möglich, bei denen das Leuchtmittel 3, wie es in den Figuren 10 und 11 gezeigt ist, ausserhalb der Bereiche der Erhebungen 12 angeordnet ist. Das vom Leuchtmittel 3 ausgestrahlte Licht kann dann üblicherweise nicht auf direktem Weg vom Leuchtmittel 3 zu den Durchbrüchen 14 bzw. den Aussparungen 20, falls solche vorhanden sind, gelangen. Damit das Licht dennoch zu den Durchbrüchen 14 bzw. den Aussparungen 20 gelangen kann, ist die Tragschicht 4 dann als Lichtleiter ausgebildet, innerhalb welchem das vom Leuchtmittel 3 ausgestrahlte Licht entsprechend geleitet wird. Dazu können in oder an der Tragschicht 4 insbesondere reflektierende Elemente vorgesehen sein, sodass das vom Leuchtmittel 3 zu den Durchbrüchen 14 bzw. den Aussparungen 20 geleitete Licht zumindest einmal seine Richtung ändert. Bei dieser Ausführungsform ist es insbesondere möglich, dass das Anzeigeelement nur ein einziges Leuchtmittel 2 aufweist, welches dazu ausgebildet ist, die Durchbrüche 14 bzw. Aussparungen 20 einer Vielzahl von Erhebungen zu beleuchten. Selbstverständlich kann auch bei dieser Ausführungsform eine Folie 5 zwischen Abdeckung 1 und Tragschicht 4 angeordnet sein (siehe Figur 11). Vorteilhaft ist das Leuchtmittel 3 in die Tragschicht 4 eingebettet bzw. von dieser umspritzt.

Die Tragschicht 4 und/oder die Folie 5 können als ein Diffusor zum Streuen des durch die Durchbrüche 14 bzw. die Aussparungen 20 hindurchtretenden Lichts ausgebildet sein.

Ebenso wie beim Anzeigeelement der in der Figur 6 gezeigten Ausführungsform weist das in der Figur 12 gezeigte Anzeigeelement rückseitig zur Abdeckung 1 weder eine Tragschicht noch eine Folie auf. Im Gegensatz zu der in der Figur 6 gezeigten Ausführungsform wird das graphische Element hier durch die Form der Erhebung 12 gebildet, d.h. die Form der oberen Schicht 120 entspricht gerade derjenigen des graphischen Elements. Ein derartig ausgebildetes Anzeigeelement ist besonders einfach herstellbar.

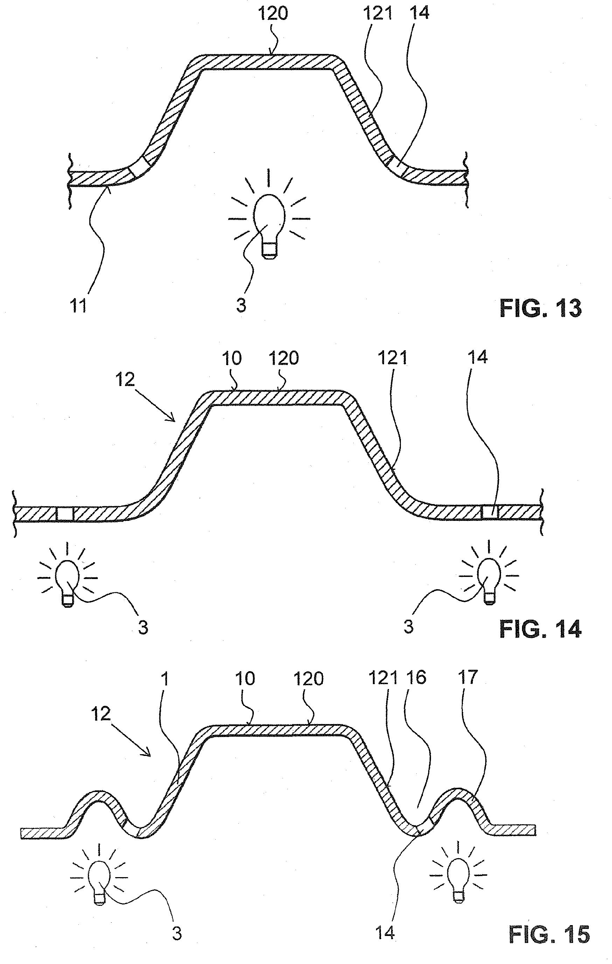

Bei der in der Figur 12 gezeigten Ausführungsform sind die Durchbrüche 14 in einem oberen Bereich der Erhebung 12 nahe zur oberen Fläche 120 angeordnet. Die in der Figur 13 gezeigte Ausführungsform unterscheidet sich von derjenigen der Figur 12 dadurch, dass die Durchbrüche 14 in einem unteren Bereich der Erhebung 12 im Übergangsbereich der Seitenfläche 121 zum horizontal ausgebildeten Teil der Abdeckung 1, welcher die Erhebung 12 umgibt, angeordnet sind.

Bei der in der Figur 14 gezeigten Ausführungsform sind die Durchbrüche 14 sogar ausserhalb der Erhebung 12 angeordnet. Die Erhebung 12, welche aufgrund ihrer Form das graphische Element bildet, ist hier von den Durchbrüchen 14 umrandet.

Bei der in der Figur 15 gezeigten Ausführungsform ist unmittelbar angrenzend zur Erhebung 12 in der Abdeckung 1 eine die Erhebung 12 umlaufende Erhöhung 17 ausgebildet, welche zusammen mit der Seitenfläche 121 der Erhebung 12 einen umlaufenden Kanal 16 bildet. Im Querschnitt betrachtet ist die Abdeckung 1 in dem unmittelbar an die Erhebung 12 angrenzenden Bereich somit wellenförmig oder S-förmig ausgebildet. In einem unteren Bereich der Erhöhung 12 innerhalb des Kanals 16 weist die Abdeckung 1 Durchbrüche 14 auf, welche derart angeordnet sind, dass Licht, welches vom Leuchtmittel 3 ausgestrahlt wird, bei einem senkrechten Durchtritt durch die Durchbrüche 14 auf die Seitenfläche 121 der Erhebung 12 fällt. Es ergibt sich dadurch ein besonders ansprechender optischer Effekt.

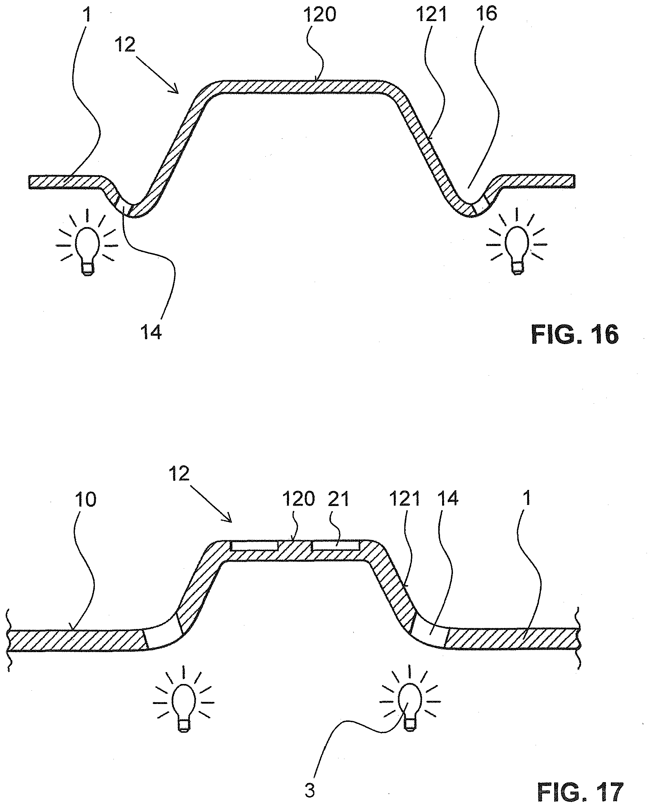

In der Ausführungsform, welche in der Figur 16 gezeigt ist, wird ein die Erhebung 12 zumindest teilweise umlaufender Kanal 16 dadurch gebildet, dass sich die Seitenfläche 121 bis unterhalb die Ebene des die Erhebung 12 umgebenden Teils der Abdeckung 1 erstreckt. Die Durchbrüche 14 sind auch hier derart im Bereich des Kanals 16 in der Abdeckung 1 angeordnet, dass Licht, welches in einer senkrechten Richtung durch die Durchbrüche 14 hindurchtritt, auf die Seitenfläche 121 fällt. Die Erhebung 12 ist dadurch vom Licht des Leuchtmittels 3 seitlich anstrahlbar.

Bei der in der Figur 17 gezeigten Ausführungsform sind die Durchbrüche 14 im Übergangsbereich der Seitenfläche 121 zu dem die Erhebung 12 umgebenden, horizontalen Teil der Abdeckung 1 angeordnet. Eine reliefartige Struktur 21, welche in der oberen Fläche 120 der Erhebung 12 ausgebildet ist, bildet hier das graphische Element.

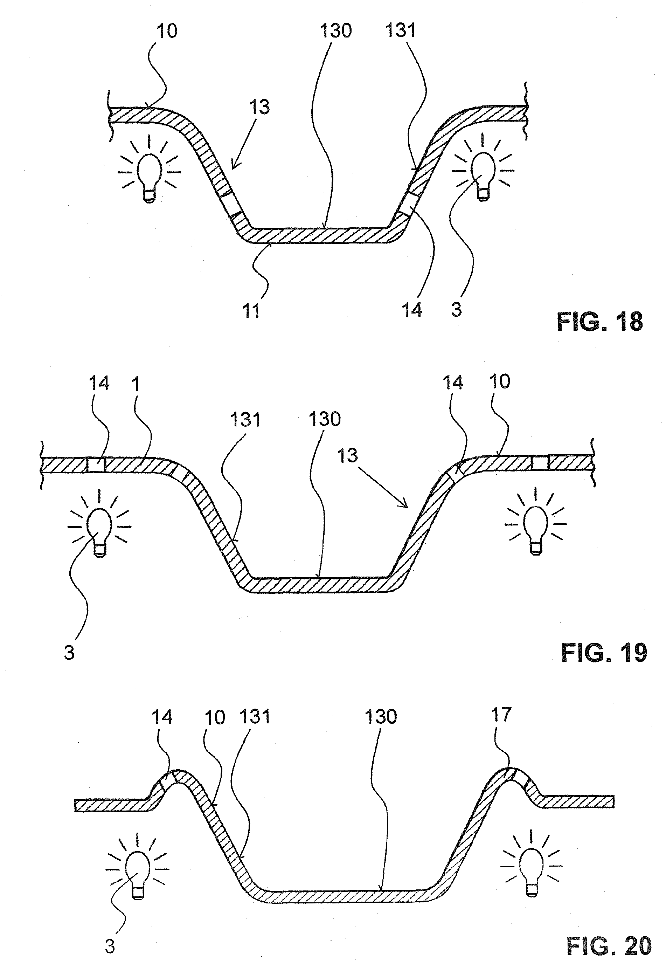

Die in den Figuren 18 bis 20 gezeigten Ausführungsformen unterscheiden sich von den in den Figuren 1 bis 17 gezeigten Ausführungsformen dadurch, dass die die graphischen Elemente jeweils nicht innerhalb einer Erhebung sondern innerhalb einer Vertiefung 13 der Abdeckung 1 angeordnet sind. In den Ausführungsformen der Figuren 18 bis 20 ist die Vertiefung 13 jeweils derart ausgebildet, dass sie aufgrund ihrer Form ein graphisches Element bildet. Die Vertiefung 13 weist somit bei allen drei Ausführungsformen jeweils eine untere Fläche 130 auf, deren Sichtseite bzw. Oberseite jeweils die Form eines graphischen Elements hat. Von der eben ausgebildeten unteren Fläche 130 erstreckt sich jeweils umlaufend eine Seitenfläche 131 nach oben hin. Die Seitenfläche 131 weitet sich dabei nach oben hin leicht auf.

Bei der in der Figur 18 gezeigten Ausführungsform sind die Durchbrüche 14 in einem unteren Bereich der Seitenfläche 131 nahe zur unteren Fläche 130 angeordnet.

Bei dem in der Figur 19 gezeigten Anzeigeelement befinden sich Durchbrüche 14 ausserhalb der Vertiefung 13 in dem sich angrenzend zur Vertiefung 13 entlang der horizontalen Richtung erstreckenden Teil der Abdeckung 1. Weitere Durchbrüche 14 sind zudem im Übergangsbereich von der Seitenfläche 131 zu dem die Vertiefung 13 umgebenden Teil der Abdeckung 1 ausgebildet.

Bei der in der Figur 20 gezeigten Ausführungsform erstreckt sich die Seitenfläche 131 nach oben hin bis über den die Vertiefung 13 umgebenden Teil der Abdeckung 1 hinaus. Dadurch bildet sich eine die Vertiefung 13 umrandende Erhöhung 17, innerhalb welcher die Durchbrüche 14 angeordnet sind.

Die vorstehende Erfindung ist selbstverständlich nicht auf die vorliegenden Ausführungsformen beschränkt und eine Vielzahl von Abwandlungen ist möglich. Insbesondere ist es auch möglich, die unterschiedlichen Merkmale der oben aufgeführten Ausführungsformen miteinander zu kombinieren. So können selbstverständlich auch bei den in den Figuren 18 bis 20 dargestellten Anzeigeelementen, bei denen das graphische Element jeweils innerhalb einer Vertiefung angeordnet ist, an der Rückseite der Abdeckung 1 jeweils eine Tragschicht und/oder eine Folie angebracht sein. Bei allen Ausführungsbeispielen kann jeweils pro Erhebung bzw. Vertiefung nur ein einzelner Durchbruch vorgesehen sein, welcher das graphische Element zumindest teilweise oder vollständig umschliesst, oder es können mehrere Durchbrüche vorhanden sein, welche das graphische Element gemeinsam zumindest teilweise oder vollständig umschliessen. Innerhalb der Vertiefungen 13 können natürlich auch Aussparungen oder reliefartige Strukturen vorgesehen sein, welche das graphische Element bilden. Eine Vielzahl weiterer Abwandlungen und Kombinationen ist denkbar.

**BEZUGSZEICHENLISTE**

| | | | |
|---|---|---|---|
| 1 | Abdeckung | | |
| 10 | Sichtseite | 2 | Graphisches Element |
| 11 | Rückseite | 20 | Aussparung |
| 12 | Erhebung | 21 | Reliefartige Struktur |
| 120 | Obere Fläche | 22 | Schicht |
| 121 | Seitenfläche | 23 | Inselförmiger Bereich |
| 122 | Innenfläche | 24 | Schenkel |
| 13 | Vertiefung | | |
| 130 | Untere Fläche | 3 | Leuchtmittel |
| 131 | Seitenfläche | | |
| 14 | Durchbruch | 4 | Tragschicht |
| 15 | Steg | | |
| 16 | Kanal | 5 | Folie |
| 17 | Erhöhung | | |

## Patentansprüche

1. Beleuchtbares Anzeigeelement insbesondere für ein Fahrzeug, aufweisend
eine flächig ausgebildete Abdeckung (1) mit einer Sichtseite (10), einer Rückseite (11) und zumindest einem Durchbruch (14);
zumindest ein graphisches Element (2), welches an der Sichtseite (10) der Abdeckung (1) vorgesehen und/oder ausgebildet ist; sowie
ein Leuchtmittel (3), welches zum Beleuchten des Durchbruchs (14) dient;
wobei das graphische Element (2) vom zumindest einen Durchbruch (14) zumindest teilweise derart umschlossen ist, dass das graphische Element (2) zumindest teilweise vom Licht des Leuchtmittels (3) umstrahlbar ist,
wobei die Abdeckung (1) zumindest eine sich nach oben hin erstreckende Erhebung (12) aufweist, innerhalb welcher das graphische Element (2) oberhalb des zumindest einen Durchbruchs (14) angeordnet ist, oder die Abdeckung (1) zumindest eine sich nach unten hin erstreckende Vertiefung (13) aufweist, innerhalb welcher das graphische Element (2) unterhalb des zumindest einen Durchbruchs (14) angeordnet ist
**dadurch gekennzeichnet, dass**
das Anzeigeelement zumindest im Bereich des zumindest einen Durchbruchs (14) eine Tragschicht (4) aufweist, welche an der Rückseite (11) der Abdeckung (1) angeordnet ist.

2. Beleuchtbares Anzeigeelement nach Anspruch 1, wobei die Erhebung (12) und/oder die Vertiefung (13) zu einem Grossteil und insbesondere vollständig vom zumindest einen Durchbruch (14) umschlossen ist.

3. Beleuchtbares Anzeigeelement nach Anspruch 1 oder 2, wobei die Erhebung (12) eine obere Fläche (120) aufweist bzw. die Vertiefung (13) eine untere Fläche (130) aufweist, innerhalb welcher das graphische Element (2) angeordnet ist, und welche insbesondere im Wesentlichen eben ausgebildet ist, sowie eine Seitenfläche (121; 131) aufweist, welche sich im Wesentlichen umlaufend von der oberen Fläche (120) aus nach unten hin bzw. von der unteren Fläche (130) nach oben hin erstreckt, und wobei der zumindest eine Durchbruch (14) innerhalb dieser Seitenfläche (121; 131) angeordnet ist.

4. Beleuchtbares Anzeigeelement nach einem der vorhergehenden Ansprüche, wobei der zumindest eine Durchbruch (14) ausserhalb der Erhebung (12) und/oder der Vertiefung (13) angeordnet ist.

5. Beleuchtbares Anzeigeelement nach Anspruch 4, wobei der zumindest eine Durchbruch (14) innerhalb eines Bereiches der Abdeckung (1) angeordnet ist, welcher derart zur Erhebung (12) hin geneigt ist, dass die Erhebung (12) vom Licht des Leuchtmittels (3) seitlich anstrahlbar ist.

6. Beleuchtbares Anzeigeelement nach einem der vorhergehenden Ansprüche, wobei die zumindest eine Erhebung (12) und/oder die zumindest eine Vertiefung (13) derart ausgebildet ist, dass sie aufgrund ihrer Form das graphische Element (2) bildet.

7. Beleuchtbares Anzeigeelement nach einem der vorhergehenden Ansprüche, wobei die Erhebung (12) und/oder Vertiefung (13) zumindest eine vom Leuchtmittel (3) beleuchtbare Aussparung (20) aufweist, welche derart ausgestaltet ist, dass sie zumindest teilweise das graphische Element (2) bildet.

8. Beleuchtbares Anzeigeelement nach einem der vorhergehenden Ansprüche, wobei wenigstens im Bereich des zumindest einen Durchbruchs (14) auf der Rückseite (11) der Abdeckung (1) wenigstens eine Folie (5) aufgebracht ist, die insbesondere zumindest teilweise in den zumindest einen Durchbruch (14) eingreift.

9. Beleuchtbares Anzeigeelement nach Anspruch 8, wobei die Folie (5) zumindest im Bereich des Durchbruchs (14) eine Oberflächenbeschichtung aufweist, welche zumindest annähernd denselben optischen Eindruck bewirkt, wie das Material, aus welchem die Abdeckung (1) hergestellt ist.

10. Beleuchtbares Anzeigeelement nach einem der vorhergehenden Ansprüche, wobei die Tragschicht (4) einen Lichtleiter bildet, welcher dazu dient, vom Leuchtmittel (3) ausgestrahltes Licht zu dem zumindest einen Durchbruch (14) hinzuleiten, und wobei am Lichtleiter insbesondere Reflexionselemente vorgesehen sind, welche derart ausgebildet und angeordnet sind, dass das zu dem zumindest einen Durchbruch (14) hingeleitete Licht zumindest einmal seine Richtung ändert.

11. Beleuchtbares Anzeigeelement nach einem der vorangehenden Ansprüche, wobei das graphische Element (2) zumindest teilweise durch eine reliefartige Struktur (21) gebildet ist.

12. Beleuchtbares Anzeigeelement nach einem der vorangehenden Ansprüche, wobei das graphische Element (2) zumindest teilweise durch zumindest eine auf die Sichtseite (10) der Abdeckung (1) aufgebrachte Schicht (22) gebildet ist.

13. Beleuchtbares Anzeigeelement nach einem der vorhergehenden Ansprüche, wobei es sich beim beleuchtbaren Anzeigeelement um eine Zierleiste und insbesondere um eine Einstiegsleiste eines Fahrzeugs handelt.

14. Verfahren zur Herstellung eines beleuchtbaren Anzeigeelements nach einem der vorhergehenden Ansprüche, aufweisend zumindest die folgenden Schritte:
- Bereitstellen einer flächig ausgebildeten Abdeckung (1), welche eine Sichtseite (10) und eine Rückseite (11) aufweist;
- Ausbilden von zumindest einer sich nach oben hin erstreckenden Erhebung (12) oder von zumindest einer sich nach unten hin erstreckenden Vertiefung (13) in der Abdeckung (1) mittels Umformen der Abdeckung (1);
- Ausbilden von zumindest einem Durchbruch (14) in der Abdeckung (1);
- Anbringen einer Tragschicht (4) an der Rückseite der Abdeckung (1) zumindest im Bereich des zumindest einen Durchbruchs (14),
wobei die Erhebung (12) oder Vertiefung (13) derart ausgebildet bzw. angeordnet wird, dass das graphische Element (2) innerhalb der Erhebung (12) bzw. Vertiefung (13) angeordnet ist,
und wobei das graphische Element (2) und der zumindest eine Durchbruch (14) relativ zueinander derart angeordnet und ausgebildet werden, dass der zumindest eine Durchbruch (14) im Falle einer Erhebung (12) unterhalb des graphischen Elements (2) und im Falle einer Vertiefung (13) oberhalb des graphischen Elements (2) angeordnet ist und dieses zumindest teilweise umschliesst.

15. Verfahren nach Anspruch 14, wobei die Tragschicht (4) mittels eines Spritzgussverfahrens zumindest im Bereich des zumindest einen Durchbruchs (14) an der Rückseite der Abdeckung (1) angebracht wird.

16. Verfahren nach Anspruch 15, wobei die Tragschicht (4) derart unter Druck an der Rückseite der Abdeckung (1) angebracht wird, dass aufgrund des Druckes die zumindest eine Erhebung (12) und/oder die zumindest eine Vertiefung (13) in der Abdeckung (1) ausgebildet wird.

17. Verfahren nach Anspruch 15 oder 16, wobei die Tragschicht (4) derart an der Rückseite (11) der Abdeckung (1) angebracht wird, dass die Tragschicht (4) zumindest teilweise in den zumindest einen Durchbruch (14) eingreift.

## Claims

1. An illuminable display element, in particular for a vehicle, comprising
a two-dimensionally extending cover (1) with a visible side (10), a rear side (11) and at least one opening (14);
at least one graphical element (2) which is provided and/or formed on the visible side (10) of the cover (1); and
a lighting element (3) which is used to illuminate the opening (14);
wherein the graphical element (2) is at least partially enclosed by the at least one opening (14) in such a way that light from the lighting element (3) can at least partly shine around the graphical element (2),
wherein the cover (1) has at least one elevation (12) extending upward, within which the graphical element (2) is arranged above the at least one opening (14), or the cover (1) has at least one depression (13) extending downward, within which the graphical element (2) is arranged below the at least one opening (14)
**characterized in that**, at least in the region of the at least one opening (14), the display element comprises a carrier layer (4) which is arranged on the rear side (11) of the cover (1).

2. The illuminable display element as claimed in claim 1, wherein the elevation (12) and/or the depression (13) is for the most part, and in particular fully, enclosed by the at least one opening (14).

3. The illuminable display element as claimed in claim 1 or 2, wherein the elevation (12) has an upper surface (120), or the depression (13) has a lower surface (130), within which the graphical element (2) is arranged, and which in particular is essentially formed in a planar fashion, as well as a side surface (121; 131) which extends essentially circumferentially from the upper surface (120) downward or from the lower surface (130) upward, the at least one opening (14) being arranged within this side surface (121; 131).

4. The illuminable display element as claimed in one of the preceding claims, wherein the at least one opening (14) is arranged outside the elevation (12) and/or the depression (13).

5. The illuminable display element as claimed in claim 4, wherein the at least one opening (14) is arranged within a region of the cover (1) which is inclined with respect to the elevation (12) in such a way that the elevation (12) can be exposed laterally to the light from the lighting element (3).

6. The illuminable display element as claimed in one of the preceding claims, wherein the at least one elevation (12) and/or the at least one depression (13) is configured in such a way that it forms the graphical element (2) by virtue of its shape.

7. The illuminable display element as claimed in one of the preceding claims, wherein the elevation (12) and/or depression (13) comprises at least one recess (20) which can be illuminated by the lighting element (3) and is configured in such a way that it at least partially forms the graphical element (2).

8. The illuminable display element as claimed in one of the preceding claims, wherein, at least in the region of the at least one opening (14), at least one foil (5), which in particular engages at least partially in the at least one opening (14), is applied on the rear side (11) of the cover (1).

9. The illuminable display element as claimed in claim 8, wherein, at least in the region of the opening (14), the foil (5) comprises a surface coating which leads to at least approximately the same optical impression as the material from which the cover (1) is made.

10. The illuminable display element as claimed in one of the preceding claims, wherein the carrier layer (4) forms a light guide, which is used to guide light emitted by the lighting element (3) to the at least one opening (14), and in particular with reflection elements being provided on the light guide, which are configured and arranged in such a way that the light guided to the at least one opening (14) changes its direction at least once.

11. The illuminable display element as claimed in one of the preceding claims, wherein the graphical element (2) is at least partially formed by a relief-like structure (21).

12. The illuminable display element as claimed in one of the preceding claims, wherein the graphical element (2) is at least partially formed by at least one layer (22) applied onto the visible side (10) of the cover (1) .

13. The illuminable display element as claimed in one of the preceding claims, wherein the illuminable display element is a trim strip, and in particular a sill strip of a vehicle.

14. A method for producing an illuminable display element as claimed in one of the preceding claims, comprising at least the following steps:
- providing a two-dimensionally extending cover (1) comprising a visible side (10) and a rear side (11);
- forming at least one elevation (12) extending upward or at least one depression (13) extending downward in the cover (1) by means of shaping the cover (1);
- forming at least one opening (14) in the cover (1);
- applying a carrier layer (4) on the rear side of the cover (1) at least in the region of the at least one opening (14),
wherein the elevation (12) and/or the depression (13) are configured and/or arranged in such a way that the graphical element (2) is arranged within the elevation (12) or depression (13),
and wherein the graphical element (2) and the at least one opening (14) are arranged and configured with respect to one another in such a way that the at least one opening (14) is arranged below the graphical element (2) in the case of an elevation (12) and above the graphical element (2) in the case of a depression (13), and at least partially encloses this element.

15. The method as claimed in claim 14, wherein the carrier layer (4) is applied on the rear side of the cover (1) by means of an injection molding method.

16. The method as claimed in claim 15, wherein the carrier layer (4) is applied under pressure on the rear side of the cover (1) in such a way that the pressure forms the at least one elevation (12) and/or the at least one depression (13) in the cover (1).

17. The method as claimed in claim 15 or 16, wherein the carrier layer (4) is applied on the rear side (11) of the cover (1) in such a way that the carrier layer (4) at least partially engages in the at least one opening (14).

## Revendications

1. Un élément d'affichage pouvant être éclairé, en particulier pour un véhicule, comprenant
un couvercle (1) formé de manière plane ayant une face visible (10), une face arrière (11) et au moins une percée (14) ;
au moins un élément graphique (2), qui est prévu et/ou formé sur la face visible (10) du couvercle (1) ; ainsi qu'
un moyen d'éclairage (3), qui sert à éclairer la percée (14) ;
où l'élément graphique (2) est entouré au moins en partie par l'au moins une percée (14) de telle manière que l'élément graphique (2) peut être auréolé au moins en partie par la lumière du moyen d'éclairage (3),
où le couvercle (1) comprend au moins une surélévation (12) s'étendant vers le haut à l'intérieur de laquelle l'élément graphique (2) est disposé au-dessus de l'au moins une percée (14), ou le couvercle (1) comprend au moins un évidement (13) s'étendant vers le bas à l'intérieur duquel l'élément graphique (2) est disposé au-dessous de l'au moins une percée (14),
**caractérisé en ce que** l'élément d'affichage comporte une couche de support (4) au moins dans le domaine de l'au moins une percée (14), qui est disposée sur la face arrière (11) du couvercle (1).

2. Elément d'affichage pouvant être éclairé selon la revendication 1, où la surélévation (12) et/ou l'évidement (13) sont entourés majoritairement et en particulier complètement par l'au moins une percée (14).

3. Elément d'affichage pouvant être éclairé selon la revendication 1 ou 2, où la surélévation (12) comporte une surface supérieure (120) respectivement l'évidement (13) comporte une surface inférieure (130), à l'intérieure de laquelle l'élément graphique (2) est disposé, et laquelle est formée particulièrement essentiellement de forme plate, et comporte également une surface latérale (121, 131), laquelle s'étend essentiellement de manière circonférentielle à partir de la surface supérieure (120) vers le bas respectivement à partir de la surface inférieure (130) vers le haut, et où l'au moins une percée (14) est disposé à l'intérieur de cette surface latérale (121; 131).

4. Elément d'affichage pouvant être éclairé selon une des revendications précédentes, où l'au moins une percée (14) est disposée à l'extérieur de la surélévation (12) et/ou de l'évidement (13).

5. Elément d'affichage pouvant être éclairé selon une des revendications précédentes, où l'au moins une percée (14) est disposée à l'intérieur d'un domaine du couvercle (1), lequel est incliné vers la surélévation (12) de sorte que la surélévation (12) peut être illuminée de manière latérale par la lumière du moyen d'éclairage (3).

6. Elément d'affichage pouvant être éclairé selon une des revendications précédentes, où l'au moins une surélévation (12) et/ou l'au moins un évidement (13) est formé/e de sorte que celui-ci/celle-ci forme l'élément graphique (2) en raison de sa forme.

7. Elément d'affichage pouvant être éclaire selon une des revendications précédentes, où la surélévation (12) et/ou l'évidement (13) comportent au moins une encoche (20) prouvant être éclairée par l'élément d'éclairage (3), laquelle est formée de sorte à former au moins en partie l'élément graphique (2).

8. Elément d'affichage pouvant être éclairé selon une des revendications précédentes, où au moins dans le domaine de l'au moins une percée (14), au moins un film (5) est disposé sur la face arrière (11) du couvercle (1), qui viens en prise en particulier au moins en partie avec l'au moins une percée (14).

9. Elément d'affichage pouvant être éclairé selon la revendication 8, où le film (5) comporte au moins dans le domaine de la percée (14) un revêtement de surface, lequel entraine au moins approximativement la même impression optique que le matériau à partir duquel le couvercle (1) est fabriqué.

10. Elément d'affichage pouvant être éclairé selon une des revendications précédentes, où la couche de support (4) forme un conducteur de lumière, lequel sert à conduire la lumière émise par le moyen d'éclairage (3), vers l'au moins une percée (14), et où au niveau du conducteur de lumière en particulier des éléments de réflexion sont prévus, lesquels sont formés et disposés de sorte que la lumière conduite vers l'au moins une percée (14) change de direction au moins une fois.

11. Elément d'affichage pouvant être éclairé selon une des revendications précédentes, où l'élément graphique (2) est formé au moins en partie par une structure de type relief (21).

12. Elément d'affichage pouvant être éclairé selon une des revendications précédentes, où l'élément graphique (2) est formé au moins en partie par au moins une couche (22) déposée sur la face visible (10) du couvercle (1).

13. Elément d'affichage pouvant être éclairé selon une des revendications précédentes, où l'élément d'affichage pouvant être éclairé est une baguette décorative et en particulier une baguette de seuil d'un véhicule.

14. Un procédé pour la fabrication d'un élément d'affichage pouvant être éclairé selon une des revendications précédentes, comprenant au moins des étapes suivantes:
- prévoir un couvercle (1) formé de manière plane, lequel comporte une face visible (10) et une face arrière (11) ;
- former au moins une surélévation (12) s'étendant vers le haut ou au moins un évidement (13) s'étendant vers le bas, dans le couvercle (1) au moyen d'une déformation du couvercle (1);
- former au moins une percée (14) dans le couvercle (1);
- fixer une couche de support (4) sur la face arrière du couvercle (1) au moins dans le domaine de l'au moins une percée (14),
où la surélévation (12) ou l'évidement (13) sont formés respectivement disposés de telle sorte que l'élément graphique (2) est disposé à l'intérieur de la surélévation (12) respectivement de l'évidement (13),
et où l'élément graphique (2) et l'au moins une percée (14) sont disposés et formés de manière relative l'un par rapport à l'autre de sorte que l'au moins une percée (14) est disposée au-dessous de l'élément graphique (2) dans le cas d'une surélévation (12) et au-dessus de l'élément graphique (2) dans le cas d'un évidement (13) et l'entoure au moins en partie.

15. Le procédé selon la revendication 14, où la couche de support (4) est fixée au moins dans le domaine de l'au moins une percée (14) sur la face arrière du couvercle (1) au moyen d'un procédé d'injection moulage.

16. Le procédé selon la revendication 15, où la couche de support (4) est fixée sous pression à la face arrière du couvercle (1) de telle sorte que en raison de la pression, l'au moins une surélévation (12) et/ou l'au moins un évidement (13) est formé dans le couvercle (1).

17. Le procédé selon la revendication 15 ou 16, où la couche de support (4) est fixé de telle sorte à la face arrière (11) du couvercle (1) que la couche de support (4) vient au moins en partie en prise dans l'au moins une percée (14).
